Europäisches Patentamt

European Patent Office

Office européen des brevets

(11) Veröffentlichungsnummer: **0 445 639 A2**

(12) **EUROPÄISCHE PATENTANMELDUNG**

(21) Anmeldenummer: 91102895.9

(22) Anmeldetag: 28.02.91

(51) Int. Cl.5: **C09D 5/03, C09D 133/04**

(30) Priorität: 08.03.90 DE 4007300

(43) Veröffentlichungstag der Anmeldung:
11.09.91 Patentblatt 91/37

(84) Benannte Vertragsstaaten:
AT BE CH DE DK ES FR GB GR IT LI NL SE

(71) Anmelder: HOECHST AKTIENGESELLSCHAFT
Postfach 80 03 20
W-6230 Frankfurt am Main 80(DE)

(72) Erfinder: Just, Christoph, Dr. Dipl.-Chem.
Akazienstrasse 6
W-6272 Niedernhausen(DE)
Erfinder: Godau, Claus, Dr. Dipl.-Ing.
Halbritterstrasse 9
W-6229 Kiedrich(DE)
Erfinder: Plum, Helmut, Dr. Dipl.-Chem.
Nibelungenstrasse 3
W-6204 Taunusstein(DE)

(54) Verfahren zur Herstellung von pigmentierten Pulverlacken.

(57) Die Erfindung betrifft ein Verfahren zur Herstellung von pigmentierten, vernetzbaren Pulverlacken, bestehend aus
   a) der Bindemittelkomponente,
   b) der Härterkomponente, die bei erhöhter Temperatur mit der Bidemittelkomponente a) reagieren kann,
   c) Pigmenten sowie
   d) gegebenenfalls üblichen Pulverlack-Additiven,
dadurch gekennzeichnet, daß man zunächst die Komponente c) und gegebenenfalls die Komponente d) in der gesamten oder einem Teil der Bindemittelkomponente a) oder der gesamten oder einem Teil der Härterkomponente b) mit Hilfe von bei der Herstellung von lösungsmittelhaltigen Lacken eingesetzten Dispergiermaschinen bei einer Temperatur oberhalb des Schmelzbereichs der Komponente a) oder b) dispergiert, dann mit den restlichen Einzelkomponenten in der üblichen Weise vermischt, extrudiert und mahlt.

Die danach erhältlichen pigmentierten Pulverlacke ermöglichen Beschichtungen mit verbesserter Oberflächenqualität, insbesondere verbessertem Verlauf und vermindertem Orangenschaleneffekt.

EP 0 445 639 A2

Pulverlacke sind besonders umweltfreundliche und wirtschaftliche Beschichtungsstoffe. Das liegt daran, daß auf Lösungsmittel verzichtet werden kann und daß nur sehr geringe Verluste bei der Anwendung auftreten. Als Pulverlacke werden heute überwiegend wärmevernetzbare Systeme eingesetzt, die beim Einbrennen durch eine chemische Reaktion aushärten und einen duroplastischen Film geben.

Diese Pulverlacke werden heute fast ausschließlich nach der Extrusionsmethode hergestellt, d. h. die Einzelkomponenten (Harz, Härter, Pigmente, Additive) werden zunächst vermischt und dann in Extrudern oder Knetern homogenisiert. Die Extrusion wird bei einer so niedrigen Temperatur durchgeführt, daß noch keine oder nur eine minimale Reaktion zwischen Harz und Härter stattfindet. Andererseits soll die Temperatur so hoch sein, daß das Harz als hochviskose Flüssigkeit vorliegt und eine gute Pigmentbenetzung erreicht wird. Auch bei der Verweilzeit im Extruder muß ein Kompromiß zwischen guter Pigmentbenetzung einerseits und Einsetzen der Vernetzungsreaktion andererseits gewählt werden.

Diese Methode zur Herstellung pigmentierter duroplastischer Pulverlacke besitzt gravierende Nachteile: Die Oberfläche von Beschichtungen aus den so hergestellten Pulverlacken ist oft wesentlich schlechter als die von lösungsmittelhaltigen Lacken, die Filme zeigen einen starken sogenannten Orangenschaleneffekt. Dieser Effekt tritt besonders stark bei Acrylat-Pulverlacken auf, die u. a. deswegen nur sehr selten verwendet werden, obwohl ihr Einsatz wegen der sehr guten Wetterbeständigkeit wünschenswert wäre. Außerdem lassen sich nur bei genauer Prozeßführung verschiedene Chargen mit guter Reproduzierbarkeit, z. B. bezüglich Farbe, herstellen.

Es sind auch Herstellungsverfahren für pigmentierte Pulverlacke beschrieben worden, bei denen zunächst eine pigmentierte Harzlösung und eine pigmentierte Harz-/ Härterlösung hergestellt werden. Anschließend wird das Lösungsmittel im Vakuumextruder (US-Patentschrift 3 993 849, DE-Offenlegungsschrift 20 05 691) oder durch Vakuumdünnschichtverdampfung (DE-Offenlegungsschrift 20 05 691) entfernt. Eine andere Möglichkeit besteht in der Sprühtrocknung (GB-Patentschrift 1 364 244) der pigmentierten Harz-/Härterdispersion oder der Koagulation pigmentierter Harzlösungen in Wasser (DE-Offenlegungsschrift 20 08 711). Bei diesen Herstellungsverfahren entspricht die Dispergierung dem Stand der Technik bei der Herstellung lösungsmittelhaltiger Lacke, sie ist deshalb besonders einfach durchzuführen. Die Probleme liegen jedoch in der Trocknung. Schon geringe Lösungsmittelreste wirken sich nachteilig auf die Lagerstabilität der Pulver aus. Außerdem muß die Trocknung von pigmentierten Harz-/Härterdispersionen bei möglichst niedrigen Temperaturen durchgeführt werden, um eine unerwünschte Vernetzung oder Vorvernetzung zu vermeiden.

Es wurde nun ein einfaches Verfahren zur Herstellung von pigmentierten Pulverlacken gefunden, daß diese Nachteile nicht aufweist und das pigmentierte Pulverlacke liefert, aus denen sich Beschichtungen mit deutlich besserer Oberflächengualität, d. h. gutem Verlauf und geringem Orangenschaleneffekt, herstellen lassen. Ein weiterer Vorteil dieses Verfahrens ist, daß die Lacke ein höheres Deckvermögen besitzen, d.h. daß entweder die Pigmentkonzentration im Lack gesenkt oder die Schichtstärke reduziert werden kann. Beide Möglichkeiten bieten wirtschaftliche Vorteile. Gegenstand des Patentes ist ein Verfahren zur Herstellung von pigmentierten, vernetzbaren Pulverlacken, bestehend aus

a) der Bindemittel(Harz)komponente,

b) der Härterkomponente, die bei erhöhter Temperatur mit der Bindemittelkomponente a) reagieren kann,

c) Pigmenten sowie

d) gegebenenfalls üblichen Pulverlack-Additiven, dadurch gekennzeichnet, daß man zunächst die Komponente c) und gegebenenfalls die Komponente d) in der gesamten oder einem Teil der Bindemittelkomponente a) oder der gesamten oder einem Teil der Härterkomponente b) mit Hilfe von bei der Herstellung von lösungsmittelhaltigen Lacken üblicherweise eingesetzten Dispergiermaschinen bei einer Temperatur oberhalb des Schmelzbereichs der Komponente a) oder b) dispergiert, dann mit den restlichen Einzelkomponenten in der üblichen Weise vermischt, extrudiert und mahlt.

Als Bindemittel(Harz)komponente a) können grundsätzlich alle hierfür auf dem Pulverlackgebiet bekannten Bindemittel (Harze) eingesetzt werden. Derartige Harze sind unter anderem in H. Kittel, "Lehrbuch der Lacke und Beschichtungen", Band VIII, Teil 2, S. 11 ff; Colomb Verlag, 1980, American Paint and Coatings Journal, August 1988, S.40-50 und Journal of Coatings Technology, 59 (750), 1987, S.39-47 beschrieben. Beispielsweise genannt seien hier:

1) Acrylatharze mit OH-, $CO_2H$- und/oder Epoxi-Gruppen,

2) Polyesterharze mit OH- und/oder $CO_2H$-Gruppen und

3) Epoxidharze

sowie Mischungen aus derartigen Harzen.

Die Acrylatharze 1) können z. B. bestehen aus

a) Acrylsäure oder Methacrylsäureestern einwertiger Alkohole mit 1 - 18 C-Atomen, wie z. B. Methylmethacrylat, Butylacrylat, Butylmethacrylat, 2-Ethylhexylacrylat, Laurylmethacrylat, Isobornylacrylat, Isobornylmethacrylat;

b) hydroxylgruppenhaltigen Monomeren, wie Acryl- oder Methacrylsäuremonoester polyfunktioneller Alkohole, z. B. Hydroxyethylacrylat, Hydroxyethylmethacrylat, Hydroxypropylmethacrylat, Hydroxybutylacrylat, Hydroxybutylmethacrylat oder wie Vinylglykol;

c) epoxidgruppenhaltigen Monomeren, wie Glycidylmethacrylat oder Glycidylacrylat;

d) carboxylgruppenhaltige Monomeren, wie Acrylsäure, Methacrylsäure, Crotonsäure, Maleinsäure, Itaconsäure, Fumarsäure, Maleinsäure und Monoalkylester von ungesättigten Dicarbonsäuren. Das säuregruppenhaltige Monomer wird bevorzugt in einer Menge von 3 - 25 Gew.-% im Polymer eingesetzt;

e) weitere copolymerisierte Monomere wie Vinylaromaten, z. B. Styrol, alpha-Methylstyrol, Vinyltoluol, Acrylnitril, Methacrylnitril, Acrylamid, Methacrylamid, n-Substitutionsprodukte dieser Amide, n-Vinylpyridin, Maleinsäureester usw.

Sie können auch polyestermodifiziert sein, indem z.B. auf niedermolekulare Polyester Acrylatmonomere und andere copolymerisierbare Monomere aufgepfropft werden.

Geeignete Acrylatharze sind beispielsweise aus den US-Patentschriften 3 932 367, 3 939 127, 3 991 132, 3 991 133, 3 993 849, 3 998 768, 4 009 131, 4 091 048, 4 374 954, 4 402 983 und 4 727 111, den EP-Offenlegungsschriften 209 377, 214 448, 220 637, 240 984, 256 369, 275 051, 284 996, 299 420 und 314 447, sowie den DE-Offenlegungsschriften 2 353 040, 2 441 624, 2 441 753, 2 509 410,2 516 978 und 3 545 061, bekannt.

Diese Acrylatharze können nach den üblichen Polymerisationsverfahren wie Lösungs-, Fällungs-, Substanz-, Perl- oder Emulsionspolymerisation unter Mitverwendung üblicher Polymerisationsinitiatoren und Molekulargewichtsregler hergestellt werden. Besonders bevorzugt sind Substanzpolymerisationsverfahren, wie sie z. B. in der EP-Offenlegungsschrift 56 971 und der DE-Offenlegungsschrift 2 642 327 beschrieben sind.

Die Polyesterharze 2) werden aus Polycarbonsäuren oder deren Derivaten wie Phthalsäure, Phthalsäureanhydrid, Isophthalsäure, Terephthalsäure, Dimethylterephthalat, Trimellithsäureanhydrid, Pyromellithsäureanhydrid, Adipinsäure und Polyhydroxyverbindungen wie Ethylglykol, Propylenglykol, Butandiol, Hexandiol, Hydroxypyralinsäure, Neopentylester, Dimethylolcyclohexan, Trimethylolethan, Trimethylolpropanglycerin hergestellt. Die Herstellungsmethoden sind bekannt. Im allgemeinen erfolgt die Herstellung bei Temperaturen bis 220°C in der Schmelze. Geeignete Polyesterharze sind z. B. in den US-Patentschriften 4 801 680, den EP-Offenlegungsschriften 85 913, 242 714, 244 823, 322 827, 322 834 und 312 331, sowie den DE-Offenlegungsschriften 35 25 110, 36 18 355, 37 11 374, 37 40 932, 39 08 031 und 39 36 973, beschrieben.

Die einsetzbaren Epoxidharze 3) weisen durchschittlich mehr als eine Epoxidgruppe/Molekül auf. Die Epoxidharze können gesättigt oder ungesättigt, aliphatisch, cycloaliphatisch, araliphatisch oder heterocyclisch sein. Besonders geeignet sind Epoxidharze auf Basis von Bisphenol A. Eingesetzt werden können auch Epoxinovolake. Eine andere Klasse von Epoxidharzen sind Verbindungen mit mehr als einer Exoxidgruppe/Molekül, z. B. Triglycidylisocyanurat, Triglycidylurazol, Glycidylether, wie die auf Basis von Bisphenol A und Glycidylester, wie die der Phthalsäure, Tetrahydro- oder Hexahydrophthalsäure. Geeignete Epoxidharze sind beispielsweise aus dem Handbuch "Epoxidverbindungen und Epoxidharze" von A. M. Paquin, Springer Verlag, Berlin 1958, Kapitel IV, aus Lee, Neville "Handbook of Epoxy Resins", 1967, Chapter 2 und aus Wagner/Sarx, "Lackkunstharze", Carl Hanser Verlag (1971), S. 174 ff., der EP-Offenlegungsschrift 292 771, sowie den DE-Offenlegungsschriften 36 24 078 und 36 24 117 bekannt.

Die erfindungsgemäß eingesetzten Härtungsmittel b) sind ebenfalls literaturbekannt. Als Vernetzer für OH-haltige Polyester oder OH-haltige Acrylatharze kommen insbesondere folgende bekannte Substanzklassen in Frage: Polycarbonsäureanhydride, Polycarbonsäuren, Aminoharze, verkappte Polyisocyanate und Polyoxazolone.

Polycarbonsäureanhydride sind z. B. Poly(adipinsäure)anhydrid, Poly(azelainsäure)anhydrid, Poly-(sebacinsäure)anhydrid, Poly(dodecandisäure)anhydrid oder deren Umsetzungsprodukte mit mehrwertigen Alkoholen sowie andere polymere Anhydride.

Die Polycarbonsäure kann ein $CO_2H$-haltiger Polyester oder ein $CO_2H$-haltiges Acrylatharz sein, wie sie bereits oben beschrieben worden sind. Es kann aber auch eine Dicarbonsäure, z. B. eine aliphatische oder aromatische Dicarbonsäure, wie Bernsteinsäure, Glutarsäure, Adipinsäure, Dodecandisäure, Azelainsäure usw. eingesetzt werden.

Die Aminoharze basieren auf Additionsprodukten von Formaldehyd mit amino- oder amidogruppenhaltigen Substanzen. Am gebräuchlichsten sind Reaktionsprodukte von Alkohol und Formaldehyd mit Melamin, Harnstoff oder Benzoguanamin. Diese Kondensationsprodukkte können monomer oder polymer sein. Die Aminoharze enthalten Methylol oder ähnliche Alkylolgruppen, meistens ist zumindest ein Teil dieser Alkylolgruppen mit Alkohol verethert. Bevorzugt wird als Alkohol Methanol oder Butanol eingesetzt.

3

Als verkappte Polyisocyanate kommen Polyisocyanate in Frage, deren Isocyanatgruppen ganz oder teilweise blockiert sind, z. B. mit Caprolactam, Alkoholen, Ketoximen, Malonestern, Acetessigestern usw. Es können auch Acylurethane eingesetzt werden, wie sie z.B. in den DE-Offenlegungsschriften 34 21 293 und 34 21 294 beschrieben sind. Außerdem werden blockierungsmittelfreie Uretdion- und urethangruppenhaltige Polyisocyanatderivate eingesetzt.

Polyoxazolone, die mindestens 2 Oxazolonreste im Molekül enthalten, sind z. B. in der DE-Offenlegungsschrift 25 16 978 offenbart.

Als Vernetzer für $CO_2H$-haltige Polyester oder $CO_2H$-haltige Acrylatharze können insbesondere folgende Substanzen eingesetzt werden: Polyepoxide, Polyoxazoline, OH-haltige Polymere und Betahydroxyalkylamide.

Geeignete Polyepoxide oder OH-Polymere sind bereits oben beschrieben (siehe hierzu auch die DE-Offenlegungsschrift 36 18 355). Polyoxazoline finden sich z. B. in der DE-Offenlegungsschrift 29 01 157 oder der DE-Auslegeschrift 10 50 540, Betahydroxyalkylamide in der DE-Offenlegungsschrift 25 09 237.

Als Vernetzer für Epoxidharze kommen vor allem Polycarbonsäuren, Polyanhydride und Aminoharze in Frage, wie sie bereits weiter oben beschrieben worden sind.

Es können jeweils auch Gemische der entsprechenden Härter eingesetzt werden.

Um dem Pulverlack die gewünschte Farbe zu geben, werden als Komponente c) die üblichen Pigmente zugegeben. Die Pigmente werden im allgemeinen in einer Menge von 1 bis 50 Gew.-%, vorzugsweise 2 bis 40 Gew.-%, bezogen auf den Gesamtlack eingesetzt, wobei die Menge von der Art der Pigmente und auch von der Schichtdicke abhängt. Bei Ruß wird bereits häufig eine Menge von ca. 1 Gew.-%, vorzugsweise 1 bis 3 Gew.-% ausreichend sein, während bei Titandioxid die Menge speziell 20 bis 40 Gew.-% beträgt. Die übrigen Pigmente kommen vorzugsweise in Mengen von 5 bis 40 Gew.-% zum Einsatz, wobei es sich jeweils auch um Gemische handeln kann.

Es können anorganische oder organische Pigmente eingesetzt werden, wie z.B. Eisenoxide, wie Eisenoxidrot, -gelb oder -schwarz, Bleioxide und -chromate, Ruß, Titandioxid, Talkum, Bariumsulfat, Chromgelb, Phthalocyaninblau, Phthalocyaningrün, Chromgrün, Zinkchromat, Chromtitangelb, Nickeltitangelb, Kobaltblau, Kobaltgrün, Molybdänorange, Molybdänrot, Cadmiumorange, Cadmiumrot, Azopigmente, Triphenylmethanpigmente, Metallkernpigmente, Carbonylpigmente, Dioxazinpigmente usw.

Als Komponente d) können verschiedene Additive Verwendung finden, wie sie üblicherweise in Pulverlacken enthalten sind, insbesondere Entgasungsmittel wie z. B. Benzoin, das im allgemeinen in Mengen von 0,1 - 3,0 Gew.-%, bezogen auf Gesamtlack, eingesetzt wird. Weiterhin können Verlaufsmittel verwendet werden, z. B. oligomere Polyacrylate, wie z. B. Polylauryl(meth)acrylat, Polybutyl(meth)acrylat, Poly-2-ethylhexyl(meth)acrylat oder fluorierte Polymere oder Polysiloxane. Zur Verbesserung der Wetterbeständigkeit können die bekannten UV-Absorber und Antioxidanzien zugegeben werden.

Zur Herstellung der pigmentierten Pulverlacke werden zuerst die Komponenten c) und gegebenenfalls die Komponente d) in einer der Komponenten a) oder b) oder Teilmengen davon dispergiert. Diese Dispergierung erfolgt in den üblichen Dispergiermaschinen, die sonst bei der Herstellung lösungsmittelhaltiger Lacke eingesetzt werden, z. B. Zahnkolloidmaschinen, Dissolver (doppelwandige Temperiergefäße mit Dispergierscheiben) oder Rührwerksmühlen. Die Dispergiermaschinen müssen beheizbar sein, weil die Dispergierung bei relativ hohen Temperaturen durchgeführt wird, nämlich oberhalb des Schmelzpunktes der jeweiligen Komponente a) oder b) bzw. entsprechender Mischungen von a) und b). Die Temperatur sollte dabei so gewählt werden, daß die Viskosität der reinen Komponente a) oder b) zweckmäßigerweise unterhalb 3.000 mPa·s, vorzugsweise zwischen 500 und 2500 mPa·s liegt. Im allgemeinen kommen Temperaturen von 100° C bis 200° C in Frage. In den meisten Fällen dürfte die Temperatur bei 160 - 180° C liegen.

Die Materialien können vor dem Dispergierprozeß trocken vermischt werden. Meistens ist es vorteilhaft, zunächst die Komponente a) oder b) aufzuschmelzen und dann die Komponente c) und gegebenenfalls d) sukzessive unter Rühren einzutragen. Das Verhältnis von Komponente c) zur Harzkomponente a) oder Härterkomponente b) richtet sich nach Art, Korngröße und Oberflächenbehandlung der Pigmente und der Art des Bindemittels oder Härters und kann innerhalb breiter Grenzen variieren. Die dispergierte Mischung wird dann mit der noch fehlenden Komponente a) oder b) trocken gemischt und anschließend in üblicher Weise bei Temperaturen von 80° C bis 120° C extrudiert. Das Extrudat wird nach Abkühlung und Zerkleinerung auf einer Mühle gemahlen, wobei je nach Verwendungszweck mittlere Teilchengrößen von ca. 40 bis 90 µm, vorzugsweise 50 bis 70 µm, angestrebt werden. Ein eventuell vorhandener Grobkornanteil kann abgesiebt werden.

Die erfindungsgemäß erhältlichen Pulverlacke können auf beliebige Substrate wie Metall, Glas oder Kunststoff durch die üblichen Methoden appliziert werden. Besonders geeignet ist das elektrostatische Sprühen. Die Härtung wird je nach Vernetzungsmechanismus bei Temperaturen zwischen 100° C und 250 ° C vorgenommen.

Es war überraschend, daß Pulverlacke, die nach diesem Verfahren hergestellt werden, sehr glatte Oberflächen liefern. Das gilt insbesondere für pigmentierte Acrylpulverlacke, die eine sehr rauhe Oberfläche besitzen, wenn sie nach den herkömmlichen Verfahren im Extruder hergestellt werden. Eigene Versuche zeigten, daß auch durch eine Veränderung der Verweilzeit oder der Temperatur beim Extrudieren oder durch mehrmaliges Extrudieren die Pigmentbenetzung - vor allem von Acrylharzen - und damit die Oberflächenqualität nur unwesentlich verbessert werden kann. Dise Verbesserung war auch deshalb nicht zu erwarten, weil nach Aussagen in der Literatur sich durch die Herstellung von Pigmentkonzentratschmelzen keine einwandfreie Pigmentverteilung erreichen läßt (siehe Kittel, "Lehrbuch der Lacke und Beschichtungen", Band XIII, Teil 2, 1980). Ebenfalls nicht vorhersehbar war, daß die pigmentierten Pulverlacke, die nach dem erfindungsgemäßen Verfahren hergestellt werden, ein höheres Deckvermögen besitzen.

Beispiel 1

437 g eines hydroxylgruppenhaltigen Acrylatharzes a) (Copolymer aus 29,9 Gew.-% Styrol, 17,4 % Hydroxyethylmethacrylat, 10 Gew.-% n-Butylmethacrylat, 12,4 % n-Butylacrylat, 30 % Methylmethacrylat und 0,3 % Methacrylsäure) und 5 g Benzoin wurden in einem doppelwandigen Temperiergefäß (1 l Inhalt, 10 cm Durchmesser) auf 170 ° C erwärmt. Dann wurden 300 g Titandioxid eingetragen und mit Hilfe einer Dispergierscheibe von 4 cm Durchmesser bei einer Umfangsgeschwindigkeit von ca. 13 m/s fein dispergiert. Nach dem Erkalten der Harz/Pigmentmischung wurde mit 258 g eines verkappten aliphatischen Polyisocyanats (®Additol XL 432, Hoechst AG) vermischt und bei 80 - 100 ° C und 300 U/min auf einem Doppelwellenextruder dispergiert. Das Extrudat wurde nach Kühlen und Vorzerkleinerung zu einem Pulver einer durchschnittlichen Korngröße von 80 µm gemahlen. Das Grobkorn mit Korngrößen über 125 µm wurde abgesiebt, das Pulver mit einer elektrostatischen Pulversprühanlage bei 60 kV auf entfettete, geerdete Eisenbleche so aufgespritzt, daß nach dem Einbrennen bei 200 ° C/20 min eine Schichtdicke von 45 µm resultierte.

Beispiel 2

Analog Beispiel 1 wurden zuerst 291 g des Acrylatharzes a), 300 g Titandioxid und 5 g Benzoin dispergiert, anschließend weitere 146 g des Acrylatharzes a) und 258 g Additol XL 432 zugegeben und extrudiert.

Beispiel 3

Analog Beispiel 1 wurden zuerst 117 g des Acrylatharzes a), 300 g Titandioxid und 5 g Benzoin dispergiert, anschließend weitere 330 g des Acrylatharzes a) und 258 g Additol XL 432 zugegeben und extrudiert.

Vergleichsversuch 4

437 g des hydroxylgruppenhaltigen Acrylatharzes a), 5 g Benzoin und 300 g Titandioxid wurden trocken gemischt und dann bei 120 ° C und 150 U/min extrudiert. Anschließend wurden 258 g Additol XL 432 zugegeben und, wie in Beispiel 1 beschrieben, weitergearbeitet.

Vergleichsversuch 5

Analog Vergleichsversuch 4 wurden zunächst 291 g des Acrylatharzes a), 300 g Titandioxid und 5 g Benzoin extrudiert, dann weitere 146 g des Acrylatharzes a) und 258 g Additol XL 432 zugegeben und, wie in Beispiel 1 beschrieben, weitergearbeitet.

Vergleichsversuch 6

Analog Vergleichsversuch 4 wurden zunächst 177 g des Acrylatharzes a), 300 g Titandioxid und 5 g Benzoin extrudiert, dann weitere 330 g des Acrylatharzes a) und 258 g Additol XL 432 zugegeben und, wie in Beispiel 1 beschrieben, weitergearbeitet.

Vergleichsversuch 7

437 g des hydroxylgruppenhaltigen Acrylatharzes, 258 g Additol XL 432, 300 g Titandioxid und 5 g Benzoin wurden trocken gemischt und dann bei 80 - 100°C und 300 U/min extrudiert, gemahlen, appliziert und eingebrannt.

| | Beispiele | | | Vergleichsbeispiele | | | |
|---|---|---|---|---|---|---|---|
| | 1 | 2 | 3 | 4 | 5 | 6 | 7 |
| Glanz (%) 60°-Optik | 92 | 93 | 93 | 84 | 86 | 86 | 72 |
| Verlauf* | 2 | 2 | 2 | 4 | 4 | 4 | 3 |

\* mit Noten von 1 bis 5 bewertet;
  1 ist sehr gut

Die nach dem erfindungsgemäßen Verfahren hergestellten Pulverlacke zeigen einen wesentlich besseren Verlauf und besseren Glanz als der nach dem bekannten Verfahren hergestellten Pulverlack gemäß Vergleichsversuch 7. Eine Variation des bekannten Verfahrens durch eine Vordispergierung im Extruder (s. Vergleichsversuche 4 - 6) liefert zwar bessere Glanzwerte als Vergleichsversuch 7, aber einen noch schlechteren Verlauf.

**Patentansprüche**

1. Verfahren zur Herstellung von pigmentierten, vernetzbaren Pulverlacken, bestehend aus
   a) der Bindemittelkomponente,
   b) der Härterkomponente, die bei erhöhter Temperatur mit der Bindemittelkomponente a) reagieren kann,
   c) Pigmenten sowie
   d) gegebenenfalls üblichen Pulverlack-Additiven, dadurch gekennzeichnet, daß man zunächst die Komponente c) und gegebenenfalls die Komponente d) in der gesamten oder einem Teil der Bindemittelkomponente a) oder der gesamten oder einem Teil der Härterkomponente b) mit Hilfe von bei der Herstellung von lösungsmittelhaltigen Lacken eingesetzten Dispergiermaschinen bei einer Temperatur oberhalb des Schmelzbereichs der Komponente a) oder b) dispergiert, dann mit den restlichen Einzelkomponenten in der üblichen Weise vermischt, extrudiert und mahlt.

2. Verfahren nach Anspruch 1, dadurch gekennzeichnet, daß die Bindemittelkomponente a) ein mit der Härterkomponente b) vernetzbares Harz aus der Gruppe Acrylatharz, Polyesterharz und Epoxidharz, vorzugsweise ein Acrylatharz, darstellt.

3. Verfahren nach Anspruch 1 und/oder 2, dadurch gekennzeichnet, daß die Härterkomponente b) im Falle eines Acrylatharzes als Komponente a) eine Verbindung aus der Gruppe Polycarbonsäureanhydride, Polycarbonsäuren, Aminoharze, verkappte Polyisocyanate, Uretdione, Polyepoxide und ß-Hydroxyalkylamide ist.

4. Verfahren nach mindestens einem der Ansprüche 1 bis 3, dadurch gekennzeichnet, daß die Bindemittelkomponente a) ein Hydroxylgruppen enthaltendes oder ein polyestermodifiziertes, Hydroxylgruppen enthaltendes Acrylatharz und die Härterkomponente b) ein verkapptes Polyisocyanat oder ein Uretdion ist.

**5.** Verfahren nach mindestens einem der Ansprüche 1 bis 3, dadurch gekennzeichnet, daß die Bindemittelkomponente a) ein Epoxyd- oder ein Epoxyd- und Hydroxyl-Gruppen enthaltendes Acrylatharz und die Härterkomponente b) eine Polycarbonsäure oder ein Polycarbonsäureanhydrid ist.

**6.** Verfahren nach mindestens einem der Ansprüche 1 bis 3, dadurch gekennzeichnet, daß die Bindemittelkomponente a) ein carboxylgruppenhaltiges Acrylatharz und die Härterkomponente b) ein ß-Hydroxyalkylamid ist.

**7.** Verfahren nach Anspruch 1 und/oder 2, dadurch gekennzeichnet, daß die Härterkomponente b) im Falle eines Polyesterharzes als Komponente a) eine Verbindung aus der Gruppe Polyepoxide, ß-Hydroxyalkylamide, Polycarbonsäureanhydride, Polycarbonsäuren, Aminoharze, verkappte Polyisocyanate und Uretdione ist.

**8.** Verfahren nach mindestens einem der Ansprüche 1 bis 7, dadurch gekennzeichnet, daß die Dispergierung der Komponenten c) und gegebenenfalls d) in der Komponente a) oder b), vorzugsweise a), bei Temperaturen von 100 bis 200° C, vorzugsweise 150 bis 200° C, erfolgt.

**9.** Verfahren nach mindestens einem der Ansprüche 1 bis 8, dadurch gekennzeichnet, daß die Dispergierung mittels Zahnkolloidmaschinen, Rührwerksmühlen oder vorzugsweise Dissolvern erfolgt.